# FASCICULE DE BREVET EUROPEEN

(11) **EP 0 645 902 B1**
(45) Date de publication et mention de la délivrance du brevet: **26.04.2000**
(21) Numéro de dépôt: 94402085.8
(22) Date de dépôt: 20.09.1994
(51) Int. Cl.: H04B 7/212

(54) **Système de transmission de données par satellite entre centres de commutation téléphoniques, station de trafic et procédé de transmission correspondants**
Satellitenanordnung für Datenübertragung zwischen Telefonvermittlungstellen, Verkehrstation und Übertragungsverfahren dafür
Satellite system for data transmission between telephone branch exchanges, traffic station and transmission method therefor

(30) Priorité: 23.09.1993 FR 9311338
(43) Date de publication de la demande: 29.03.1995
(73) Titulaire: ALCATEL, 75008 Paris (FR)
(72) Inventeur: Bringer, Bernard, F-92700 Colombes (FR)
(74) Mandataire: Scheer, Luc

(56) Documents cités:
- EP-A- 0 213 640
- EP-A- 0 324 363
- IEEE JOURNAL ON SELECTED AREAS IN COMMUNICATIONS, vol.10, no.6, Août 1992, NEW-YORK,US; pages 1066 - 1080, XP296622 BELLA ET AL 'Role of ISDN Signaling for a satellite System with On-Bord Processing'
- COMMUTATION AND TRANSMISSION, vol.14, no.1, 1992, PARIS,FR; pages 49 - 54, XP257952 BRINGER ET AL 'Telephonie applications on TDMA satellite system'

## Description

Le domaine de l'invention est celui des systèmes de télécommunications. Plus précisément la présente invention concerne un réseau Télécom à allocation dynamique de ressources à la demande incorporant une transmission par satellite. Les voies du satellite peuvent être à multiplexage temporel (AMRT ou TDMA en anglais) ou fréquentiel (AMRF ou SCPC en anglais) ou plus généralement avec une allocation de ressources.

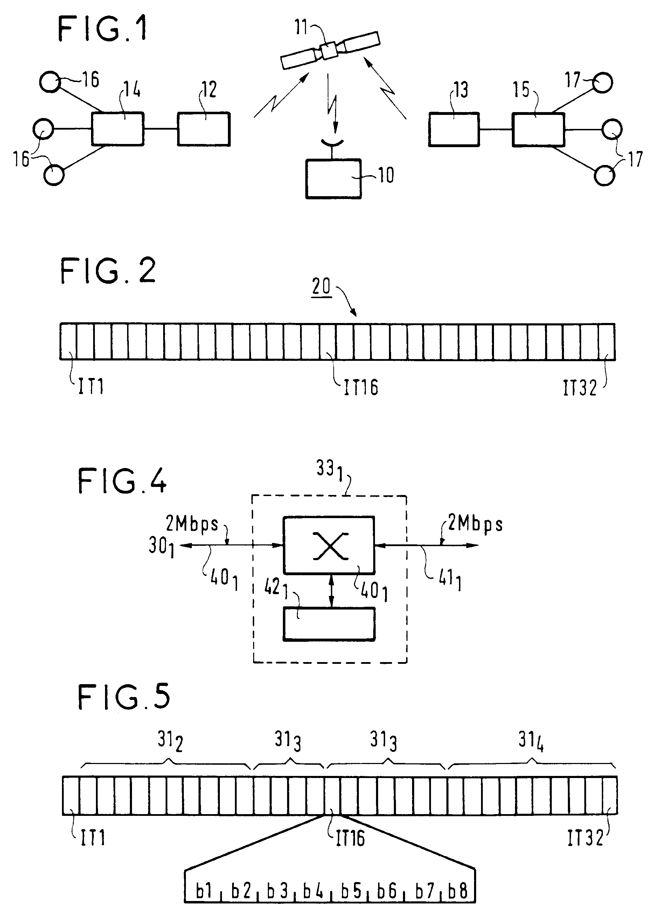

La figure 1 représente un réseau de transmission de données par satellite de type connu. Ce réseau comprend notamment un satellite 11 et un centre 10 de gestion de ressources de communications qui communique par voie hertzienne avec le satellite 11. Des stations de trafic 12, 13, comprenant des terminaux fonctionnant en mode TDMA ou SCPC, communiquent également avec le satellite 11 et sont raccordées à des centres 14, 15 de commutation téléphoniques, publics ou privés, généralement appelés PSTN (Public Switching Telephone Network). Chaque PSTN 14, 15 est raccordé à une pluralité d'abonnés 16, 17.

Les communications entre les abonnés 16 et les abonnés 17 connectés à des stations de trafic différentes sont établies par le centre de gestion 10 qui alloue dynamiquement des fréquences de transmission (en mode de fonctionnement SCPC) ou des intervalles de temps d'une trame temporelle (en fonctionnement TDMA) en fonction des demandes de connexion de ces abonnés. Un tel fonctionnement est appelé DAMA (Demand Assignment Multiple Access) et permet, grâce à cette allocation dynamique de ressources, d'optimiser l'utilisation des ressources satellite.

Ainsi, l'affectation des ressources satellite a lieu à la demande ; lorsqu'un abonné demande une communication, et si sa demande peut être honorée, une voie du satellite est établie entre la station de trafic de départ à laquelle est connecté l'abonné demandeur et une station de trafic d'arrivée à laquelle est connecté l'abonné demandé. Le centre de gestion 10 est également informé de la libération des ressources affectées, c'est à dire en fin de communication.

Un système de communications de ce type est décrit dans l'article "Applications téléphoniques sur systèmes AMRT par satellite" de B. BRINGER et al., paru dans Commutation et Transmission, n°1/1992.

Le centre 10 assure non seulement la gestion des fréquences satellite mais également la mise à disposition de modems au niveau des stations de trafic de départ et d'arrivée, afin d'établir les liaisons téléphoniques.

Le fonctionnement est généralement le suivant :

En mode de fonctionnement SCPC, le centre de gestion 10 effectue une allocation de fréquences satellite lorsqu'il détecte une prise de ligne par un abonné 16 ou 17, cette prise de ligne étant un signal analogique (fréquence particulière) ou numérique (bit ou mot de signalisation de prise de ligne) transmis par l'abonné au centre de gestion 10 par l'intermédiaire du PSTN 12 ou 13. Les PSTN 12 et 13 effectuent une mise en forme des signaux émis par les abonnés pour les transmettre au centre de gestion 10 par l'intermédiaire d'un modem.

Un exemple d'une telle trame est représenté à la figure 2 et référencé 20. La trame 20 est constituée de 32 intervalles de temps de 8 bits chacun, notés IT1 à IT32, le premier intervalle de temps IT1 étant réservé à des signalisations spéciales, l'intervalle de temps IT16 véhiculant la signalisation de ligne issue du PSTN et les autres intervalles de temps étant réservés aux transmissions des données utiles (numérotation, données de parole,...) émises par les abonnés pour un sens de transmission. Ces abonnés sont par exemple constitués par de simples postes téléphoniques, par des autocommutateurs privés ou par un réseau téléphonique public. Chaque trame a une durée de 125 µs et permet d'assurer un débit de communication à 2 Mbps.

Le principal inconvénient d'un réseau de ce type est que le centre 10 de gestion du réseau doit effectuer l'enregistrement et l'analyse des demandes (numérotation) pour pouvoir assurer l'allocation des ressources nécessaires pour l'établissement des communications. Il a également pour fonction d'assurer la surveillance des communications, la facturation des abonnés ainsi que d'autres fonctions annexes, en fait toutes les fonctions demandées à un centre de transit, et sa conception est donc très complexe.

Le centre de gestion analyse deux types de signalisations : la signalisation de ligne et la signalisation d'enregistreur. La signalisation de ligne est essentiellement constituée par les signaux de prise et de libération de ligne et la signalisation d'enregistreur par la numérotation et les dialogues échangés entre les centres de commutation téléphoniques.

De plus, la configuration du centre de gestion doit être adaptée à son environnement puisque les signalisations échangées sont différentes d'un pays à l'autre. Chaque fabricant doit alors prévoir un nombre de modèles de centres de gestion correspondant au nombre de pays dans lesquels il les propose.

On aurait pu imaginer effectuer un transcodage des signalisations pour que celles-ci soient identiques quel que soit la signalisation utilisée dans le réseau de transmission (codes R2, 5, 7, Socotel, Colisée, Q23, ISDN, ISPN, ...), ce qui aurait permis la conception d'un centre de gestion polyvalent, mais cette solution entraîne un appauvrissement des possibilités de dialogue entre les PSTN et le développement de tous les cas de figure de transcodage un coût important. De plus, un transcodage de la signalisation entraînerait un ralentissement des communications.

La présente invention a notamment pour objectif de remédier à ces inconvénients.

Plus précisément, un des objectifs de l'invention est de fournir un réseau de transmission où les tâches du centre de gestion sont simplifiées et notamment qu'il puisse être identique quelque soit la signalisation utilisée dans le réseau de communication dans lequel il se trouve. Il est alors possible d'utiliser un centre de gestion identique quelle que soit la signalisation utilisée dans le réseau de transmission.

Un autre objectif est de fournir une station de trafic permettant l'utilisation d'un tel centre de gestion polyvalent.

Un objectif complémentaire est de fournir un procédé de transmission adapté à un tel système.

Ces objectifs, ainsi que d'autres qui apparaîtront par la suite, sont atteints grâce à un système de communication par liaison satellite entre centres de commutation téléphoniques par l'intermédiaire de stations de trafic, ce système incluant un centre de gestion comprenant des moyens d'analyse des demandes de communication formulées par les centres de commutation, un centre de commutation formulant une demande de communication étant appelé centre de commutation de départ, par l'intermédiaire d'une station de trafic raccordée à ce centre de commutation de départ, appelée station de trafic de départ, et répondant aux demandes de communication en attribuant une ressource du satellite et une ressource de la station de trafic raccordée au centre de commutation avec lequel une communication doit être établie, appelés respectivement station de trafic d'arrivée et centre de commutation d'arrivée, afin de mettre en communication la station de trafic de départ et la station de trafic d'arrivée,
ce système étant caractérisé en ce que la station de trafic de départ comprend :
- des moyens pour aiguiller les demandes de communication formulées par le centre de commutation de départ sur des trames découpées en intervalles de temps, chaque intervalle de temps correspondant à une station de trafic d'arrivée prédéterminée,
- des moyens pour déceler la survenance de demandes de communication dans ces trames,
- des moyens pour transmettre au centre de gestion, en réponse à chaque demande de communication, une demande d'affectation de ressource comprenant la désignation de la station de trafic de départ et celle de la station de trafic d'arrivée.

Ainsi, l'analyse de la signalisation de ligne est entièrement traitée au niveau des stations de trafic et non plus dans le centre de gestion. Le centre de gestion peut ainsi être utilisé pour tout type de signalisation.

Le fait de ne pas transmettre la signalisation entraîne également un établissement des communications plus rapide que dans l'état de la technique puisque ces signalisations restent aux niveaux des stations de trafic.

La signalisation d'enregistreur est quant à elle analysée au niveau des centres de commutation ou alors au niveau des moyens d'aiguillage.

Avantageusement, les moyens pour aiguiller les demandes de communication sur des intervalles de temps prédéterminés sont constitués par un autocommutateur interconnectant le centre de commutation de départ à la station de trafic de départ. Cet autocommutateur peut par exemple être constitué par celui du centre de commutation précité.

Dans le mode de fonctionnement SCPC, les ressources sont constituées par des fréquences porteuses attribuées à des modems compris dans les stations de trafic, chaque modem étant raccordé par l'intermédiaire de moyens de sélection d'intervalle de temps aux moyens pour aiguiller les demandes de communication précités.

En fonctionnement TDMA, les ressources sont constituées par des intervalles de temps d'une trame transmise entre les stations de trafic de départ et d'arrivée.

Les centres de commutation téléphoniques peuvent former un réseau maillé ou étoilé.

Les demandes de communication peuvent être constituées de mots de 4 bits véhiculés dans un des demi-intervalles de temps de l'intervalle de temps IT16 d'une trame comportant au total 32 intervalles de temps.

L'invention concerne également un station de trafic d'un système de communication par liaison satellite entre centres de commutation téléphoniques, chaque centre de commutation étant raccordé à une station de trafic, cette station de trafic comportant :
- des moyens pour aiguiller les demandes de communication formulées par le centre de commutation auquel elle est connectée sur des trames découpées en intervalles de temps, chaque intervalle de temps correspondant à une station de trafic destinatrice (d'arrivée) prédéterminée,
- des moyens pour déceler la survenance de demandes de communication dans les trames,
- des moyens pour transmettre à un centre de gestion, en réponse à chaque demande de communication, une demande d'affectation de ressource comprenant la désignation de son identité et celle de la station de trafic destinatrice.

L'invention concerne également un procédé de communication par liaison satellite entre centres de commutation téléphoniques par l'intermédiaire de stations de trafic, ce procédé consistant à analyser des demandes de communication formulées par les centres de commutation et à attribuer une ressource du satellite et une ressource de la station de trafic raccordée au centre de commutation avec lequel une communication doit être établie, appelée station de trafic d'arrivée, afin de mettre en communication la station de trafic d'arrivée et la station de trafic raccordée au centre de commutation ayant formulé la demande de communication, appelée station de trafic de départ, ce procédé consistant :
- aiguiller, au niveau d'au moins certaines stations de trafic, les demandes de communication formulées par les centres de commutation sur des trames découpées en intervalles de temps, chaque intervalle de temps correspondant à une station d'arrivée prédéterminée,
- déceler la survenance de demandes de communication dans les trames, au niveau des stations de trafic,
- transmettre au centre de gestion, en réponse à chaque demande de communication, une demande d'affectation de ressource comprenant la désignation de la station de trafic de départ et celle de ladite station de trafic d'arrivée.

D'autres caractéristiques et avantages de l'invention apparaîtront à la lecture de la description suivante d'un mode de réalisation préférentiel, donné à titre illustratif et non limitatif, et des dessins annexés, dans lesquels :
- la figure 1 représente un réseau de transmission de données par satellite de type connu ;
- la figure 2 représente une trame issue d'un centre de commutation et appliquée à une station de trafic, dans l'état de la technique connu ;
- la figure 3 représente un réseau de communication par satellite, selon un mode de réalisation préférentiel de l'invention ;
- la figure 4 représente un mode de réalisation des moyens d'aiguillage de la figure 3 ;
- la figure 5 représente une trame issue des moyens d'aiguillage de la figure 4.

Les figures 1 et 2 ont été décrites précédemment en référence à l'état de la technique.

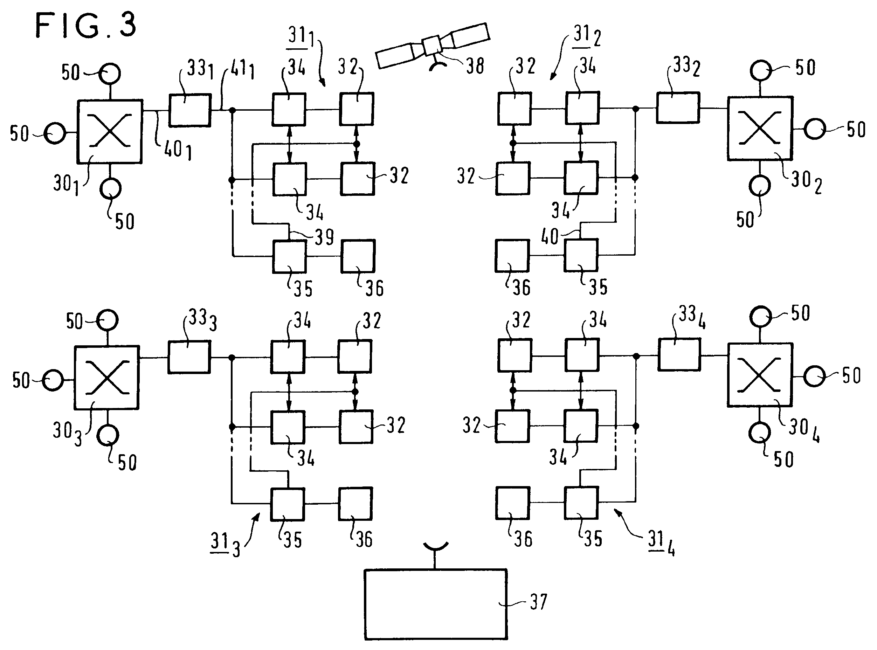

La figure 3 représente un réseau de communication par satellite, selon un mode de réalisation préférentiel de l'invention.

Le réseau de communications représenté comporte quatre centres de commutation téléphoniques 30₁ à 30₄, chaque centre étant relié d'une part à une pluralité d'abonnés 50 et d'autre part à une station de trafic, référencées respectivement 31₁ à 31₄. Les centres de commutation 30₁ à 30₄ fournissent des trames à 2Mbps telle que celle représentée à la figure 2. Chaque station de trafic 31₁ à 31₄ comporte des modems 32 destinés à assurer l'émission et la réception en full-duplex d'intervalles de temps, le mode de transmission étant ici de type SCPC, c'est à dire qu'à chaque communication correspond une fréquence porteuse (en fait deux fréquences, l'une pour l'émission et l'autre pour la réception, ces deux fréquences étant distantes d'une valeur prédéterminée).

Le réseau comporte également, de façon connue, un centre de gestion 37 et un satellite 38 par lequel les communications entre les stations de trafic transitent.

Selon l'invention, chaque station 31₁ à 31₄ comprend également des moyens d'aiguillage 33₁ à 33₄ pour aiguiller les demandes de communication formulées par le centre de commutation 31₁ à 31₄ auquel elles sont rattachées sur des trames découpées en intervalles de temps, chaque intervalle de temps correspondant à une station de trafic demandée prédéterminée.

On supposera dans la suite de cette description que le centre de commutation 30₁ formule une demande de communication par l'intermédiaire de la station de trafic 31₁, afin de communiquer avec la station de trafic 31₂. Le centre de commutation 30₁ est appelé centre de commutation de départ, la station 31₁ station de trafic de départ, la station 31₂ station de trafic d'arrivée et le centre de commutation 30₂ centre de commutation d'arrivée. Le centre de gestion doit attribuer une ressource du satellite et une ressource de la station de trafic d'arrivée afin de mettre en communication les centres de commutation reliés aux stations de trafic 31₁ et 31₂.

Un de ces moyens d'aiguillage précités, par exemple celui référencé 33₁, est représenté à la figure 4. Il comprend un organe de sélection 40₁ formant multiplexeur, recevant sur la liaison à 2 Mbps d'entrée, référencée 40₁, les trames issues du PSTN 30₁. L'organe de sélection 40₁ est piloté par un organe de commande 42₁ contenant une table faisant correspondre chaque numéro d'abonné demandé à la station à laquelle est raccordé cet abonné. A chaque station 31₂ à 31₄, pouvant être mise en communication avec la station 33₁, est affecté au moins un intervalle de temps prédéterminé dans la trame à 2 Mbps issue de l'organe de sélection 40₁, véhiculée sur une liaison 41₁. Ainsi, lorsqu'une communication est demandée par un abonné relié au PSTN 30₁, l'intervalle de temps qui sera affecté à la communication sera fonction de la station de trafic ou du PSTN auquel est raccordé l'abonné demandé.

Une trame de sortie d'un moyen d'aiguillage est représentée à la figure 5. Cette trame est par exemple celle issue du moyen d'aiguillage de la figure 4.

Un certain nombre d'intervalles de temps sont réservés aux communications destinées aux autres stations formant le réseau de transmission. Si ces autres stations sont au nombre de 3 (stations 31₂ à 31₄), les intervalles de temps IT2 à IT15 et IT17 à IT32, soit 30 intervalles de temps, sont partagés entre ces stations destinatrices (appelées stations d'arrivée). Ainsi, comme représenté à la figure 5, les intervalles de temps IT2 à IT11 peuvent être affectés aux communications entre la station 31₁ et la station 31₂, les intervalles de temps IT12 à IT15 et IT17 à IT21 aux communications entre la station 31₁ et la station 31₃ et les intervalles de temps IT22 à IT32 aux communications entre la station 31₁ et la station 31₄.

Bien entendu, une répartition différente peut être imaginée (en l'occurrence une répartition inégale des intervalles de temps) et les intervalles de temps affectés à chaque station d'arrivée ne sont pas nécessairement consécutifs.

Comme il est connu, l'intervalle de temps IT16 est utilisé pour la transmission de la signalisation de ligne et comporte également 8 bits. Les quatre premiers bits b1 à b4 sont séquentiellement utilisés pour la transmission de la signalisation de ligne relative aux intervalles de temps IT1 à IT16 et les quatre derniers bits b5 à b8 pour la transmission de la signalisation de ligne relative aux intervalles de temps IT17 à IT32. Ainsi, toutes les 15 trames renseignent sur les demandes de prise ou de libération de communication.

Une trame de ce type est fournie d'une part à des interfaces de communication 34 et à un microprocesseur 35 destiné à déceler la survenance de demandes de communication dans les trames issues des moyens d'aiguillage. Les interfaces 34 sont connectées aux modems 32 pour assurer la transmission d'intervalles de temps, comme il sera vu par la suite, et le microprocesseur, constituant un organe d'analyse de l'intervalle de temps IT16 de ces trames, est connecté à un modem 36. Les modems 36 connectés aux différents microprocesseurs communiquent avec le centre de gestion 37 par l'intermédiaire du satellite 38 sur une voie de signalisation et de contrôle. Comme il a été vu précédemment, le centre de gestion 37 comprend des moyens d'analyse des demandes de communication formulées par les PSTN et connaît les ressources disponibles au niveau de chaque station de trafic.

Le fonctionnement est le suivant : à la réception d'une demande de connexion, le PSTN de départ 30₁ envoie une demande d'invitation à transmettre à l'abonné demandeur de communication et reçoit la numérotation de celui-ci. L'analyse de cette numérotation, ou d'une partie seulement de celle-ci, effectuée au niveau des moyens d'aiguillage 33₁ permet de connaître la station d'arrivée (station 31₂) et ces moyens d'aiguillage insèrent sur l'IT16 de la trame correspondante (une des 15 trames précitées), un signal de prise de ligne. Pour l'instant, aucune information n'est placée sur l'intervalle de temps réservé à cette station destinatrice.

La présence de ce signal de prise de ligne est détectée par le microprocesseur 35 qui envoie au centre de gestion 37, à l'aide du modem 36, une demande d'affectation de ressource comprenant la désignation de la station de trafic de départ 31₁ et celle de la station de trafic d'arrivée 31₂. Le centre de gestion 37 vérifie qu'une ressource est disponible au niveau du satellite 38 et de la station de trafic d'arrivée 31₂, c'est à dire, en mode SCPC, qu'un modem 32 d'émission/réception est disponible.

En cas de non disponibilité de ressource, le centre de gestion 37 en informe le microprocesseur 35 de la station 31₁ qui communique cette information au centre de commutation 30₁.

Si une ressource est disponible, le centre de gestion 37 transmet aux microprocesseurs des stations de départ 31₁ et d'arrivée 31₂ une instruction selon laquelle ils doivent chacun activer un modem et l'interface correspondante. Le microprocesseur 35 de la station 31₁ commande alors, par la liaison 39, une interface et le modem qui lui est attaché.

Chaque interface constitue un moyen de sélection d'intervalle de temps et assure également une fonction de modulation. Chaque interface comporte notamment une fenêtre de sélection de l'intervalle de temps qu'elle doit transmettre (en mode SCPC).

L'interface sélectionnera l'intervalle de temps de la trame sur la liaison 41₁ réservé à la communication demandée et le modem se calera sur la fréquence allouée à cette communication. Il en va de même au niveau de la station 31₂ qui préparera un modem et une interface pour cette communication. L'identité de l'abonné demandé est alors transmise au centre de commutation d'arrivée par l'intermédiaire de ces modems.

L'allocation de ressources à l'émission peut bien entendu avoir été effectuée au préalable par le microprocesseur de la station 31₁, si une ressource est disponible, l'invention étant limitée à l'allocation de ressources au niveau de la station d'arrivée et du satellite. Cela suppose cependant que le microprocesseur connaisse l'état des ressources de sa station de trafic.

Lorsque les ressources sont allouées, la communication demandée s'opère directement entre les stations de départ et d'arrivée, sans l'intervention du centre de gestion 37.

Le système de l'invention fonctionne de même lors de la libération de la ligne par l'abonné, c'est à dire que le microprocesseur de la station de départ (ou d'arrivée) prévient le centre de gestion de cette libération de ligne pour qu'il libère les ressources allouées à la communication.

Le principal avantage de l'invention est que le centre de gestion n'a plus besoin d'effectuer les analyses de signalisation d'enregistreur puisque ces signalisations sont traitées par les centres de commutation ou alors par les moyens d'aiguillage.

La programmation des microprocesseurs est simple puisqu'elle consiste uniquement à lui faire reconnaître la signalisation de ligne utilisée dans le réseau de transmission, c'est à dire les signaux de prise et de libération de ligne. La signalisation d'enregistreur n'a plus besoin d'être analysée par le centre de gestion et sa conception est donc grandement facilitée. On obtient ainsi un centre de gestion de type universel puisqu'il se contente d'effectuer les allocations de ressources.

En mode de fonctionnement TDMA, un seul modem d'émission-réception est prévu et le microprocesseur effectue une allocation dynamique d'intervalles de temps sur instruction du centre de gestion.

Les moyens d'aiguillage peuvent consister en un simple autocommutateur. Il est donc également possible de réaliser cet aiguillage au niveau des centres de commutation 30₁ à 30₄.

L'invention s'applique aussi bien aux réseaux de communication de type maillé qu'étoilé.

Le procédé de communication par liaison satellite consiste donc à :
- aiguiller les demandes de communication formulées par les centres de commutation sur des trames découpées en intervalles de temps, chaque intervalle de temps correspondant à une station d'arrivée prédéterminée,
- déceler la survenance de demandes de communication dans ces trames, au niveau des stations de trafic,
- transmettre au centre de gestion, en réponse à chaque demande de communication, une demande d'affectation de ressource comprenant la désignation de la station de trafic de départ et celle de la station de trafic d'arrivée.

## Revendications

1. Système de communication par liaison satellite entre centres de commutation téléphoniques (30₁ à 30₄) par l'intermédiaire de stations de trafic (31₁ à 31₄), ledit système incluant un centre de gestion (37) comprenant des moyens d'analyse des demandes de communication formulées par lesdits centres de commutation (30₁ à 30₄), un centre de commutation formulant une demande de communication étant appelé centre de commutation de départ (30₁), par l'intermédiaire d'une station de trafic (31₁) raccordée à ce centre de commutation de départ (30₁), appelée station de trafic de départ (31₁), et répondant auxdites demandes de communication en attribuant une ressource dudit satellite (38) et une ressource de la station de trafic (31₂) raccordée au centre de commutation (30₂) avec lequel une communication doit être établie, appelés respectivement station de trafic d'arrivée (31₂) et centre de commutation d'arrivée (30₂), afin de mettre en communication ladite station de trafic de départ (31₁) et ladite station de trafic d'arrivée (31₂),
caractérisé en ce que ladite station de trafic de départ (31₁) comprend :
- des moyens (33₁ à 33₄) pour aiguiller les demandes de communication formulées par ledit centre de commutation de départ (30₁) sur des trames découpées en intervalles de temps, chaque intervalle de temps correspondant à une station de trafic d'arrivée (31₂) prédéterminée,
- des moyens (35) pour déceler la survenance de demandes de communication dans lesdites trames,
- des moyens (36) pour transmettre audit centre de gestion (37), en réponse à chaque demande de communication, une demande d'affectation de ressource comprenant la désignation de ladite station de trafic de départ (31₁) et celle de ladite station de trafic d'arrivée (31₂).

2. Système selon la revendication 1, caractérisé en ce que lesdits moyens (33₁ à 33₄) pour aiguiller lesdites demandes de communication sur des intervalles de temps prédéterminés sont constitués par un autocommutateur interconnectant ledit centre de commutation de départ (30₁) à ladite station de trafic de départ (31₁).

3. Système selon l'une des revendications 1 et 2, caractérisé en ce que lesdites ressources sont constituées par des fréquences porteuses attribuées à des modems (32) compris dans lesdites stations de trafic (31₁ à 31₄), chaque modem (32) étant raccordé par l'intermédiaire de moyens (34) de sélection d'intervalle de temps auxdits moyens (33₁ à 33₄) pour aiguiller les demandes de communication formulées par les centres de commutation de départ (30₁)sur des trames découpées en intervalles de temps.

4. Système selon l'une des revendications 1 et 2, caractérisé en ce que lesdites ressources sont constituées par des intervalles de temps d'une trame transmise entre lesdites stations de trafic de départ (31₁) et d'arrivée (31₂).

5. Système selon l'une des revendications 1 à 4, caractérisé en ce que lesdits centres de commutation téléphoniques (30₁ à 30₄) forment un réseau maillé.

6. Système selon l'une des revendications 1 à 4, caractérisé en ce que lesdits centres de commutation téléphoniques (30₁ à 30₄) forment un réseau étoilé.

7. Système selon l'une des revendications 1 à 6, caractérisé en ce que lesdites demandes de communication sont constitués de mots de 4 bits (b1 à b4; b5 à b8) véhiculés dans un des demi-intervalles de temps de l'intervalle de temps IT16 d'une trame comportant au total 32 intervalles de temps.

8. Station de trafic (31₁ à 31₄) d'un système de communication par liaison satellite entre centres de commutation téléphoniques (30₁ à 30₄), chaque centre de commutation (30₁ à 30₄) étant raccordé à une station de trafic (31₁ à 31₄),
caractérisée en ce qu'elle comporte :
- des moyens (33₁ à 33₄) pour aiguiller les demandes de communication formulées par le centre de commutation (30₁ à 30₄) auquel elle est connectée sur des trames découpées en intervalles de temps, chaque intervalle de temps correspondant à une station de trafic destinatrice (31₂ à 31₄) prédéterminée,
- des moyens (35) pour déceler la survenance de demandes de communication dans lesdites trames,
- des moyens (36) pour transmettre à un centre de gestion (37), en réponse à chaque demande de communication, une demande d'affectation de ressource comprenant la désignation de son identité et celle de ladite station de trafic destinatrice (31₂ à 31₄).

9. Procédé de communication par liaison satellite entre centres de commutation téléphoniques (30₁ à 30₄) par l'intermédiaire de stations de trafic (30₁ à 30₄), ledit procédé consistant à analyser des demandes de communication formulées par lesdits centres de commutation (30₁ à 30₄) et à attribuer une ressource dudit satellite (38) et une ressource de la station de trafic (31₂ à 31₄) raccordée au centre de commutation (30₂ à 30₄) avec lequel une communication doit être établie, appelée station de trafic d'arrivée (31₂ à 31₄), afin de mettre en communication ladite station de trafic d'arrivée (31₂ à 31₄) et la station de trafic raccordée au centre de commutation ayant formulé ladite demande de communication, appelée station de trafic de départ (31₁), caractérisé en ce qu'il consiste à :
- aiguiller, au niveau d'au moins certaines stations de trafic (31₁ à 31₄), les demandes de communication formulées par lesdits centres de commutation (30₁ à 30₄) sur des trames découpées en intervalles de temps, chaque intervalle de temps correspondant à une station d'arrivée (31₂ à 31₄) prédéterminée,
- déceler la survenance de demandes de communication dans lesdites trames, au niveau desdites stations de trafic (31₁ à 31₄),
- transmettre audit centre de gestion (37), en réponse à chaque demande de communication, une demande d'affectation de ressource comprenant la désignation de ladite station de trafic de départ (31₁) et celle de ladite station de trafic d'arrivée (31₂).

## Claims

1. System of communication by satellite link between telephone switching centres (30₁ to 30₄) via traffic stations (31₁ to 31₄), said system including a management centre (37) comprising means for analyzing call requests formulated by said switching centres (30₁ to 30₄), an originating switching centre (30₁) formulating a call request via an originating traffic station (31₁) connected to said originating switching centre (30₁) and responding to said call requests by assigning a resource of said satellite (38) and a resource of a terminating traffic station (31₂) connected to a terminating switching centre (30₂) with which a call is to be set up in order to provide communication between said originating traffic station (31₁) and said terminating traffic station (31₂),
characterized in that said originating traffic station (31₁) comprises:
- means (33₁ to 33₄) for routing call requests formulated by said originating switching centre (30₁) on frames divided into time slots, each time slot corresponding to a predetermined terminating traffic station (31₂),
- means (35) for detecting the arrival of call requests in said frames, and
- means (36) for transmitting to said management centre (37), in response to each call request, a resource assignment request comprising the identity of said originating traffic station (31₁) and that of said terminating traffic station (31₂).

2. System according to claim 1, characterized in that said means (33₁ to 33₄) for routing said call requests in predetermined time slots comprise a PABX connecting said originating switching centre (30₁) to said originating traffic station (31₁).

3. System according to claim 1 or claim 2, characterized in that said resources are carrier frequencies assigned to modems (32) in said traffic stations (31₁ to 31₄), each modem (32) being connected by time slot selector means (34) to said means (33₁ to 33₄) for routing call requests formulated by said originating switching centres (30₁) in frames divided into time slots.

4. System according to claim 1 or claim 2, characterized in that said resources are time slots of a frame transmitted between said originating (31₁) and terminating (31₂) traffic stations.

5. System according to any one of claims 1 to 4, characterized in that said telephone switching centres (30₁ to 30₄) form a meshed network.

6. System according to any one of claims 1 to 4, characterized in that said telephone switching centres (30₁ to 30₄) form a star network.

7. System according to any one of claims 1 to 6, characterized in that said call requests comprise four-bit words (b1 to b4; b5 to b8) conveyed in one half-slot of time slot IT16 of a frame including 32 time slots in total.

8. Traffic station (31₁ to 31₄) of a communication system via satellite links between telephone switching centres (30₁ to 30₄), each switching centre (30₁ to 30₄) being connected to a traffic station (31₁ to 31₄),
characterized in that it includes:
- means (33₁ to 33₄) for routing call requests formulated by said switching centre (30₁ to 30₄) to which it is connected in frames divided into time slots, each time slot corresponding to a predetermined destination traffic station (31₂ to 31₄),
- means (35) for detecting the arrival of call requests in said frames, and
- means (36) for transmitting to a management centre (37) in response to each call request, a resource assignment request comprising its identity and that of said destination traffic station (31₂ to 31₄).

9. Method of communication by satellite link between telephone switching centres (30₁ to 30₄) via traffic stations (30₁ to 30₄), said method consisting in analyzing call requests formulated by said switching centres (30₁ to 30₄) and assigning a resource of said satellite (38) and a resource of a terminating traffic station (31₂ to 31₄) connected to said switching centre (30₂ to 30₄) with which a call is to be set up in order to provide communication between said terminating traffic station (31₁ to 31₄) and an originating traffic station (31₁) connected to said switching centre which formulated said call request, characterized in that it consists in:
- at some traffic stations at least (31₁ to 31₄), routing call requests formulated by said switching centres (30₁ to 30₄) in frames divided into time slots, each time slot corresponding to a predetermined terminating station (31₂ to 31₄),
- detecting the arrival of call requests in said frames at said traffic stations (31₁ to 31₄), and
- transmitting to said management centre (37) in response to each call request a resource assignment request comprising the identity of said originating traffic station (31₁) and that of said terminating traffic station (31₂).

## Patentansprüche

1. System zur Kommunikation über Satellitenverbindung zwischen Telefon-Vermittlungsstellen (30₁ bis 30₄) über Verkehrsstationen (31₁ bis 31₄), wobei das System eine Verwaltungszentrale (37) einschließt, die Mittel zur Analyse der von den Vermittlungsstellen (30₁ bis 30₄) formulierten Kommunikationsanforderungen umfasst, wobei eine eine Kommunikationsanforderung formulierende Vermittlungsstelle als Ausgangs-Vermittlungsstelle (30₁) bezeichnet wird, über eine an diese Ausgangs-Vermittlungsstelle angeschlossene Verkehrsstation (31₁), als Ausgangs-Verkehrsstation (31₁) bezeichnet, und die auf die Kommunikationsanforderungen antwortet durch Zuweisen einer Ressource des Satelliten (38) und einer Ressource der Verkehrsstation (31₂), die an die Vermittlungsstelle (30₂) angeschlossen ist, mit der eine Kommunikation etabliert werden soll, jeweils als Ankunfts-Verkehrsstation (31₂) bzw. Ankunfts-Vermittlungsstelle (30₂) bezeichnet, um die Ausgangs-Verkehrsstation (31₁) und die Ankunfts-Verkehrsstation (31₂) in Kommunikation zu bringen,
dadurch gekennzeichnet, dass die Ausgangs-Verkehrsstation (31₁) umfasst:
- Mittel (33₁ bis 33₄) zum Abzweigen der von der Ausgangs-Vermittlungsstelle (30₁) formulierten Kommunikationsanforderungen auf in Zeitintervalle unterteilte Rahmen, wobei jedes Zeitintervall einer vorgegebenen Ankunfts-Verkehrsstation (31₂) entspricht,
- Mittel (35) zum Nachweisen des Auftretens von Kommunikationsanforderungen in den Rahmen,
- Mittel (36) zum Übertragen an die Verwaltungszentrale (37), in Antwort auf jede Kommunikationsanforderung, einer Anforderung zur Zuweisung einer Ressource, die die Bezeichnung der Ausgangs-Verkehrsstation (31₁) und der Ankunfts-Verkehrsstation (31₂) umfasst.

2. System nach Anspruch 1, dadurch gekennzeichnet, dass die Mittel (33₁ bis 33₄) zum Abzweigen der Kommunikationsanforderungen auf vorgegebene Zeitintervalle durch eine automatische Wählverbindung gebildet sind, die die Ausgangs-Vermittlungsstelle (30₁) mit der Ausgangs-Verkehrsstelle (31₁) verbindet.

3. System nach Anspruch 1 oder 2, dadurch gekennzeichnet, dass die Ressourcen aus Trägerfrequenzen bestehen, die in den Verkehrsstationen (31₁ bis 31₄) enthaltenen Modems (32) zugewiesen sind, wobei jeder Modem (32) über Zeitintervallauswahlmittel (34) an die Mittel (33₁ bis 33₄) zum Abzweigen der von den Ausgangs-Vermittlungsstellen (30₁) formulierten Kommunikationsanforderungen auf in Zeitintervalle unterteilte Rahmen angeschlossen ist.

4. System nach Anspruch 1 oder 2, dadurch gekennzeichnet, dass die Ressourcen aus Zeitintervallen eines zwischen den Ausgangs- (31₁) und Ankunfts-Verkehrsstationen (31₂) übertragenen Rahmens bestehen.

5. System nach einem der Ansprüche 1 bis 4, dadurch gekennzeichnet, dass die Telefon-Vermittlungsstellen (30₁ bis 30₄) ein Maschennetz bilden.

6. System nach einem der Ansprüche 1 bis 4, dadurch gekennzeichnet, dass die Telefon-Vermittlungsstellen (30₁ bis 30₄) ein Sternnetz bilden.

7. System nach einem der Ansprüche 1 bis 6, dadurch gekennzeichnet, dass die Kommunikationsanforderungen aus 4-Bit-Wörtern (b1 bis b4; b5 bis b8) bestehen, die in einem der Halb-Zeitintervalle des Zeitintervalls IT16 eines Rahmens befördert werden, der insgesamt 32 Zeitintervalle umfasst.

8. Verkehrsstation (31₁ bis 31₄) eines Systems zur Kommunikation über Satellitenverbindungen zwischen Telefon-Vermittlungsstellen (30₁ bis 30₄), wobei jede Vermittlungsstelle (30₁ bis 30₄) an eine Verkehrsstation (31₁ bis 31₄) angeschlossen ist,
dadurch gekennzeichnet, dass sie umfasst:
- Mittel (33₁ bis 33₄) zum Abzweigen der von der Vermittlungsstelle (30₁ bis 30₄), an die sie angeschlossen ist, formulierten Kommunikationsanforderungen auf in Zeitintervalle unterteilte Rahmen, wobei jedes Zeitintervall einer vorgegebenen Ziel-Verkehrsstation (31₂ bis 31₄) entspricht,
- Mittel (35) zum Nachweisen des Auftretens von Kommunikationsanforderungen in den Rahmen,
- Mittel (36) zum Übertragen an eine Verwaltungszentrale (37), in Antwort auf jede Kommunikationsanforderung, einer Anforderung zur Zuweisung einer Ressource, die die Bezeichnung ihrer Identität und derjenigen der Ziel-Verkehrsstation (31₂ bis 31₄) umfasst.

9. Verfahren zur Kommunikation über Satellitenverbindung zwischen Telefon-Vermittlungsstellen (30₁ bis 30₄) über Verkehrsstationen (31₁ bis 31₄), wobei das Verfahren darin besteht, von den Vermittlungsstellen (30₁ bis 30₄) formulierte Kommunikationsanforderungen zu analysieren und eine Ressource des Satelliten (38) und eine Ressource der Verkehrsstation (31₂ bis 31₄), als Ankunfts-Verkehrsstation (31₂ bis 31₄) bezeichnet, zuzuweisen, die an die Vermittlungsstelle(30₂ bis 30₄) angeschlossen ist, mit der eine Kommunikation etabliert werden soll, um die Ankunfts-Verkehrsstation (31₂ bis 31₄) und diejenige Verkehrsstation, als Ausgangs-Verkehrsstation bezeichnet, in Kommunikation zu bringen, die an die Vermittlungsstelle angeschlossen ist, die die Kommunikationsanforderung formuliert hat, dadurch gekennzeichnet, dass es darin besteht,
- an wenigsten bestimmten Verkehrsstationen (31₁ bis 31₄) die von den Vermittlungsstellen (30₄ bis 30₄) formulierten Kommunikationsanforderungen auf in Zeitintervalle unterteilte Rahmen abzuzweigen, wobei jedes Zeitintervall einer vorgegebenen Ankunftsstation (31₂ bis 31₄) entspricht,
- das Auftreten von Kommunikationsanforderungen in den Rahmen auf dem Niveau der Verkehrsstationen (31₁ bis 31₄) nachzuweisen,
- an die Verwaltungszentrale (37) in Antwort auf jede Kommunikationsanforderung eine Anforderung zur Zuweisung einer Ressource zu übertragen, die die Bezeichnung der Ausgangs-Verkehrsstation (31₁) und der Ankunfts-Verkehrsstation (31₂) umfasst.
